(19) Europäisches Patentamt
European Patent Office
Office européen des brevets

(11) **EP 4 202 676 A1**

(12) **EUROPEAN PATENT APPLICATION**

(43) Date of publication:
**28.06.2023 Bulletin 2023/26**

(51) International Patent Classification (IPC):
**G06F 9/50** (2006.01)

(21) Application number: **22185517.4**

(52) Cooperative Patent Classification (CPC):
**G06F 9/5066**

(22) Date of filing: **18.07.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2021 CN 202111611245**

(71) Applicant: **Beijing Baidu Netcom Science and Technology Co., Ltd.**
**Beijing 100085 (CN)**

(72) Inventors:
• **LIU, Ji**
  **Beijing, 100085 (CN)**
• **MA, Beiche**
  **Beijing, 100085 (CN)**
• **ZHOU, Jingbo**
  **Beijing, 100085 (CN)**
• **ZHOU, Ruipu**
  **Beijing, 100085 (CN)**
• **DOU, Dejing**
  **Beijing, 100085 (CN)**

(74) Representative: **V.O.**
**P.O. Box 87930**
**2508 DH Den Haag (NL)**

(54) **METHOD AND APPARATUS FOR MULTI-TASK SCHEDULING, DEVICE AND STORAGE MEDIUM**

(57) The present disclosure provides a method and apparatus for multi-task scheduling, a device and a storage medium, and relates to distributed computing technology in the field of artificial intelligence. The method includes: initializing a list of candidate scheduling schemes, the candidate scheduling scheme being used to allocate a terminal device for training to each machine learning task in a plurality of machine learning tasks; perturbing, for each candidate scheduling scheme in the list of candidate scheduling schemes, the candidate scheduling scheme to generate a new scheduling scheme; determining whether to replace the candidate scheduling scheme with the new scheduling scheme based on a fitness value of the candidate scheduling scheme and a fitness value of the new scheduling scheme, to generate a new scheduling scheme list; and determining a target scheduling scheme, based on the fitness value of each new scheduling scheme in the new scheduling scheme list. The method for multi-task scheduling provided by the present disclosure improves the efficiency of service scheduling and also improves the training efficiency of multi-task federated learning.

Fig. 1

EP 4 202 676 A1

**Description**

TECHNICAL FIELD

The present disclosure relates to distributed computing technology in the field of artificial intelligence technology, and in particular, to a method and apparatus for multi-task scheduling, a device, and a storage medium.

BACKGROUND

Federated learning is a new distributed machine learning technology that uses distributed data and computing resources for collaborative training among a plurality of distributed edge devices or servers, and protects data privacy of clients. Unlike traditional machine learning algorithms, federated learning does not need to share local raw data of the devices, which can effectively ensure the privacy and security of users. Federated learning only needs to distribute a to-be-trained global model to the edge devices. Different devices download the model from the server and train the model with the local data. Then, the devices upload updated model parameters to the server. Finally, the server aggregates the model parameters returned by the devices and update the model to obtain a new global model. This iteration may effectively avoid privacy leakage caused by data sharing.

Although clients do not need to share their own local data in federated learning, the training efficiency of an entire task may become low due to limited computing resources and capabilities of different devices.

SUMMARY

The present disclosure provides a method and apparatus for multi-task scheduling, a device, and a storage medium.

According to a first aspect of the disclosure, a method for multi-task scheduling is provided, which includes: initializing a list of candidate scheduling schemes, the candidate scheduling scheme being used to allocate a terminal device for training to each machine learning task in a plurality of machine learning tasks; perturbing, for each candidate scheduling scheme in the list of candidate scheduling schemes, the candidate scheduling scheme to generate a new scheduling scheme; determining whether to replace the candidate scheduling scheme with the new scheduling scheme based on a fitness value of the candidate scheduling scheme and a fitness value of the new scheduling scheme, to generate a new scheduling scheme list; and determining a target scheduling scheme, based on the fitness value of each new scheduling scheme in the new scheduling scheme list.

According a second aspect of the disclosure, an apparatus for multi-task scheduling is provided, which includes an initialization module, configured to initialize a list of candidate scheduling schemes, the candidate scheduling scheme being used to allocate a terminal device for training to each machine learning task in a plurality of machine learning tasks; a replacing module, configured to perturb, for each candidate scheduling scheme in the list of candidate scheduling schemes, the candidate scheduling scheme to generate a new scheduling scheme; determine whether to replace the candidate scheduling scheme with the new scheduling scheme based on a fitness value of the candidate scheduling scheme and a fitness value of the new scheduling scheme, to generate a new scheduling scheme list; and a determination module, configured to determine a target scheduling scheme, based on the fitness value of each new scheduling scheme in the new scheduling scheme list.

According to a third aspect, a non-transitory computer-readable storage medium storing computer instructions is provided, where the computer instructions cause a computer to execute the method according to any one implementation in the first aspect.

According to a fourth aspect, a computer program product is provided, including a computer program, which when executed by a processor implements the method according to any one implementation in the first aspect.

It should be understood that the content described in this part is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

The accompanying drawings are used for better understanding of the present solution, and do not constitute a limitation to the present disclosure. In which:

Fig. 1 is an example system architecture diagram to which the present disclosure may be applied;

Fig. 2 is a flowchart of an embodiment of a method for multi-task scheduling according to the present disclosure;

Fig. 3 is a flowchart of another embodiment of the method for multi-task scheduling according to the present disclosure;

Fig. 4 is a flowchart of yet another embodiment of the method for multi-task scheduling according to the present disclosure;

Fig. 5 is an exploded flowchart of generation steps of a candidate scheduling scheme of the method for multi-task scheduling shown in Fig. 4;

Fig. 6 is a schematic structural diagram of an embodiment of an apparatus for multi-task scheduling according to the present disclosure; and

Fig. 7 is a block diagram of an electronic device adapted to implement the method for multi-task scheduling according to embodiments of the present disclosure.

DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

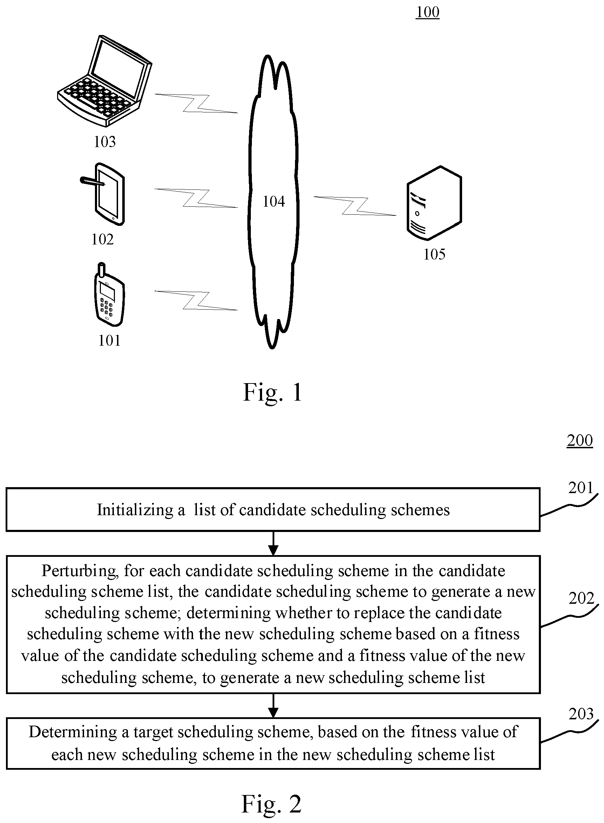

Fig. 1 illustrates an example system architecture 100 to which embodiments of a method for multi-task scheduling or an apparatus for multi-task scheduling of the present disclosure may be applied.

As shown in Fig. 1, the system architecture 100 may include terminal devices 101, 102, 103, a network 104 and a server 105. The network 104 serves as a medium for providing a communication link between the terminal devices 101, 102, 103 and the server 105. The network 104 may include various types of connections, such as wired or wireless communication links, or optical fiber cables.

A user may use the terminal devices 101, 102, 103 to interact with the server 105 via the network 104 to receive or send messages and the like. Various client applications may be installed on the terminal devices 101, 102 and 103.

The terminal devices 101, 102, and 103 may be hardware or software. When the terminal devices 101, 102, 103 are hardware, they may be various electronic devices, including but not limited to smart phones, tablet computers, laptop computers, desktop computers, and so on. When the terminal devices 101, 102, 103 are software, they may be installed in the above electronic devices. They may be implemented as a plurality of software pieces or software modules, or as a single software piece or software module, which is not limited herein.

The server 105 may provide various services. For example, the server 105 may analyze and process candidate scheduling schemes acquired from the terminal devices 101, 102, and 103, and generate a processing result (e.g., a target scheduling scheme).

It should be noted that the server 105 may be hardware or software. When the server 105 is hardware, it may be implemented as a distributed server cluster composed of a plurality of servers, or may be implemented as a single server. When the server 105 is software, it may be implemented as a plurality of software pieces or software modules (for example, for providing distributed services), or may be implemented as a single software piece or software module, which is not limited herein.

It should be noted that the method for multi-task scheduling provided by embodiments of the present disclosure is generally executed by the server 105, correspondingly, the apparatus for multi-task scheduling is generally provided in the server 105.

It should be appreciated that the numbers of terminal devices, networks and servers in Fig. 1 are merely illustrative. Any number of terminal devices, networks and servers may be provided depending on the implementation needs.

With further reference to Fig. 2, a flow 200 of an embodiment of a method for multi-task scheduling according to the present disclosure is shown. The method for multi-task scheduling includes the following steps.

Step 201 includes initializing a list of candidate scheduling schemes.

In the present embodiment, an executing body of the method for multi-task scheduling (for example, the server 105 shown in Fig. 1) may initialize the list of candidate scheduling schemes. Here, the candidate scheduling scheme is used to allocate a terminal device for training to each machine learning task in a plurality of machine learning tasks.

Federated learning is a new distributed machine learning technology that uses distributed data and computing resources for collaborative training among a plurality of distributed edge devices or servers, and protects client data privacy. In multi-task federated learning, a system for federated learning has a plurality of machine learning tasks that need to be trained, such as image classification, speech recognition, or text generation. In order to improve a training efficiency, a plurality of terminal devices train these tasks in parallel in multi-task federated learning, so that all tasks can converge as soon as possible. However, due to limited resources of the terminal devices, the plurality of tasks need to share the resources of the terminal devices, so it is needed to allocate appropriate terminal devices to each task. Based on this, it is needed to generate a corresponding candidate scheduling scheme for each machine learning task, the candidate scheduling scheme including terminal devices for training, and then the candidate scheduling schemes of all the machine learning tasks form a list of candidate scheduling schemes.

Alternatively, for each machine learning task in the plurality of machine learning tasks, the executing body may determine a period required for training the machine learning task based on a resource status of each of the plurality of terminal devices for training, then determine, based on the period, at least two terminal devices for training the task from the plurality of terminal devices, thereby generating the candidate scheduling scheme corresponding to the machine learning task, and generating the list of candidate scheduling schemes containing the candidate scheduling schemes of the plurality of machine learning tasks.

For the device scheduling problem of multi-task federated learning, a local optimal scheduling scheme, that is, a candidate scheduling scheme, is found for the task before starting to optimize the scheduling scheme.

Step 202 includes perturbing, for each candidate scheduling scheme in the list of candidate scheduling schemes, the candidate scheduling scheme to generate a new scheduling scheme; determining whether to replace the candidate scheduling scheme with the new scheduling scheme based on a fitness value of the candidate scheduling scheme and a fitness value of the new scheduling scheme, to generate a new scheduling scheme list.

In the present embodiment, for each candidate scheduling scheme in the list of candidate scheduling schemes, the executing body may perturb each candidate scheduling scheme to generate the new scheduling scheme. Since an actual search space is large and complex, and there are various scheduling schemes to choose from, the search space may grow rapidly when looking for efficient scheduling schemes with increasing problem sizes. A purpose of the present embodiment is to find a near-optimal solution by quickly traversing a large search space and generate a final scheduling scheme for starting execution of this multi-task federated learning. In order to achieve this purpose, in the present embodiment, each candidate scheduling scheme is first perturbed, thereby generating a new scheduling scheme.

Blindly changing devices in candidate scheduling schemes may generate invalid scheduling schemes and even reduce accuracy. Therefore, in the present embodiment, in the scheduling schemes of m machine learning tasks, on the premise of not violating device constraints, devices of a current scheduling scheme may be replaced with new available devices, so as to perturb the candidate scheduling scheme, thereby generating the new scheduling scheme.

Then, calculating a fitness value of each candidate scheduling scheme and a fitness value of the new scheduling scheme generated by perturbing the candidate scheduling scheme, comparing the two fitness values, and determining whether to accept the perturbation based on a comparison result, that is, based on the comparison result, whether to replace the candidate scheduling scheme with the new scheduling scheme is determined, thereby generating the new scheduling scheme list.

The fitness value is calculated based on a fitness function. In genetic algorithm, fitness is a main indicator to describe individual performance. According to a value of the fitness, individuals are selected for survival of the fittest. That is, in the present embodiment, the degree of convergence of a scheduling scheme is evaluated by the fitness value of the scheduling scheme.

Step 203 includes determining a target scheduling scheme, based on the fitness value of each new scheduling scheme in the new scheduling scheme list.

In the present embodiment, the executing body may determine the final scheduling scheme, that is, the target scheduling scheme, based on the fitness value of each new scheduling scheme in the new scheduling scheme list generated in step 202. First, the executing body may calculate the fitness value of each new scheduling scheme in the new scheduling scheme list; and then, determine a scheduling scheme having a maximum fitness value among all the fitness values as the target scheduling scheme.

The method for multi-task scheduling provided by the present embodiment, first initializing a list of candidate scheduling schemes, the candidate scheduling scheme being used to allocate a terminal device for training to each machine learning task in a plurality of machine learning tasks; then perturbing, for each candidate scheduling scheme in the list of candidate scheduling schemes, the candidate scheduling scheme to generate a new scheduling scheme; determining whether to replace the candidate scheduling scheme with the new scheduling scheme based on the fitness value of the candidate scheduling scheme and the fitness value of the new scheduling scheme, to generate a new scheduling scheme list; and finally determining a target scheduling scheme, based on the fitness value of each new scheduling scheme in the new scheduling scheme list. The method for multi-task scheduling in the present embodiment may quickly find a near-optimal solution in a large and complex search space, so as to quickly generate the target scheduling scheme for starting execution of this multi-task federated learning, which improves the efficiency of service scheduling and also improves the training efficiency of multi-task federated learning.

In the technical solution of the present disclosure, the collection, storage, use, processing, transmission, provision and disclosure of the user personal information involved are all in compliance with the relevant laws and regulations, and do not violate public order and good customs.

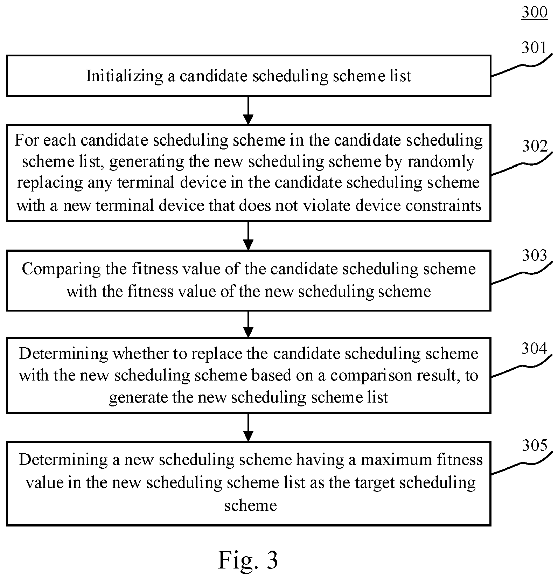

With further reference to Fig. 3, Fig. 3 shows a flow 300 of another embodiment of the method for multi-task scheduling according to the present disclosure. The method for multi-task scheduling includes the following steps.

Step 301 includes initializing a list of candidate scheduling schemes.

Step 301 is basically the same as step 201 in the foregoing embodiment. For a specific implementation, reference may be made to the foregoing description of step 201, and detailed description thereof will be omitted.

Step 302 includes for each candidate scheduling scheme in the list of candidate scheduling schemes, generating the new scheduling scheme by randomly replacing any terminal device in the candidate scheduling scheme with a new terminal device that does not violate device constraints.

In the present embodiment, for each candidate scheduling scheme in the list of candidate scheduling schemes, the executing body of the method for multi-task scheduling (for example, the server 105 shown in Fig. 1) may randomly replace any terminal device among at least two terminal device terminals included in the candidate scheduling scheme with the new terminal device. The new terminal device should not violate the device constraints, thereby generating the new scheduling scheme. Thus, the generation of invalid scheduling schemes is avoided, and the efficiency of service scheduling is improved.

Step 303 includes comparing the fitness value of the candidate scheduling scheme with the fitness value of the new scheduling scheme.

In the present embodiment, the executing body may compare the fitness value of the candidate scheduling scheme with the fitness value of the new scheduling scheme. That is, after generating the new scheduling scheme, the executing body may calculate the fitness value of the candidate scheduling scheme and the fitness value of the new scheduling scheme respectively, and then compare the two fitness values.

In some alternative implementations of the present embodiment, the fitness value is calculated based on communication time and computation time of each terminal device in the scheduling scheme. A calculation formula (1) of the fitness value may be expressed in a form as follows:

$$ fitness = - \sum_{s_m \in S} \left\{ \left( \max_{k \in s_m} \{ t_k^{cm} + t_k^{cp} \} + \lambda g(s_m) \right) \right\} \tag{1} $$

where, S represents a set of terminal devices in all rounds of training of all machine learning tasks; Sm is a set of terminal devices in all rounds of training of a task m; k represents an index of terminal devices; $t_k^{cm}$ represents the communication time of a terminal device k; $t_k^{cp}$ represents the computation time of the terminal device k. The fitness value may be calculated through the above formula (1). In the present embodiment, the degree of convergence of the scheduling scheme is evaluated by the fitness value of the scheduling scheme.

Step 304 includes determining whether to replace the candidate scheduling scheme with the new scheduling scheme based on a comparison result, to generate the new scheduling scheme list.

In the present embodiment, the executing body may determine whether to replace the candidate scheduling scheme with the new scheduling scheme based on the comparison result, thereby generating the new scheduling scheme list. For example, when the fitness value of the new scheduling scheme is greater than the fitness value of the candidate scheduling scheme, the candidate scheduling scheme is replaced with the new scheduling scheme; or when the fitness value of the new scheduling scheme is not greater than the fitness value of the candidate scheduling scheme, the candidate scheduling scheme is not replaced with the new scheduling scheme. Therefore, the scheduling schemes in the new scheduling scheme list can be closer to an optimal solution of the machine learning task.

Step 305 includes determining a new scheduling scheme having a maximum fitness value in the new scheduling scheme list as the target scheduling scheme.

In the present embodiment, the executing body may calculate the fitness value of each new scheduling scheme in the new scheduling scheme list based on formula (1), and then determine the scheduling scheme having the maximum fitness value as the final scheduling scheme, that is, the target scheduling scheme. Therefore, the target scheduling scheme is the scheme closest to the optimal solution.

It can be seen from Fig. 3 that, compared with the embodiment corresponding to Fig. 2, the method for multi-task scheduling in the present embodiment highlights the process of generating the new scheduling scheme and the new scheduling scheme list, thereby further improving the efficiency of service scheduling and the training efficiency of multi-task federated learning.

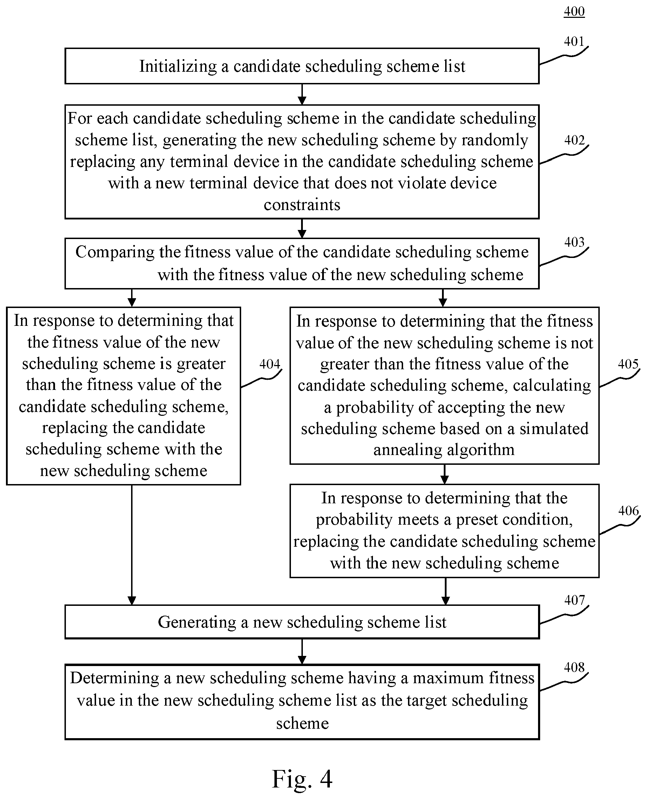

With further reference to Fig. 4, Fig. 4 shows a flow 400 of yet another embodiment of the method for multi-task scheduling according to the present disclosure. The method for multi-task scheduling includes the following steps.

Step 401 includes initializing a list of candidate scheduling schemes.

Step 402 includes for each candidate scheduling scheme in the list of candidate scheduling schemes, generating the new scheduling scheme by randomly replacing any terminal device in the candidate scheduling scheme with a new terminal device that does not violate device constraints.

Step 403 includes comparing the fitness value of the candidate scheduling scheme with the fitness value of the new scheduling scheme.

Steps 401-403 are basically the same as steps 301-303 in the foregoing embodiment. For a specific implementation, reference may be made to the foregoing description of steps 301-303, and detailed description thereof will be omitted.

Step 404 includes in response to determining that the fitness value of the new scheduling scheme is greater than the fitness value of the candidate scheduling scheme, replacing the candidate scheduling scheme with the new scheduling scheme.

In the present embodiment, the executing body of the method for multi-task scheduling (for example, the server 105 shown in Fig. 1) may replace the candidate scheduling scheme with the new scheduling scheme, in response to determining that the fitness value of the new scheduling scheme is greater than the fitness value of the candidate scheduling scheme. The fitness value of the new scheduling scheme being greater than the fitness value of the candidate scheduling scheme, indicates that a model converges faster and an effect is better during training of the new scheduling scheme. Therefore, replacing the candidate scheduling scheme with the new scheduling scheme improves a convergence speed of the model.

Step 405 includes in response to determining that the fitness value of the new scheduling scheme is not greater than the fitness value of the candidate scheduling scheme, calculating a probability of accepting the new scheduling scheme based on a simulated annealing algorithm.

In the present embodiment, the executing body may calculate the probability of accepting the new scheduling scheme based on the simulated annealing algorithm, in response to determining that the fitness value of the new scheduling scheme is not greater than the fitness value of the candidate scheduling scheme.

The simulated annealing algorithm is a key algorithm to solve optimization problems. The algorithm simulates the principle of annealing in metallurgical processes, and uses Monte Carlo simulation method to calculate molecular energy distribution in a multi-molecular system. Finding the optimal solution of a problem being analogous to finding the lowest energy of a system, with a decreasing temperature of the system, the energy gradually decreases, and the solution of the problem also "drops" to maxima and minima, so it can effectively search a huge and complex space, making optimization scheduling actually be executed. In a process of metallurgical annealing, annealing refers to a physical phenomenon in which an object gradually cools down. With a lower temperature, energy state of the object is lower, average kinetic energy of molecules in the system gradually decreases, and a perturbation ability of the molecules near their own positions also decreases. That is, a search range of the molecule itself decreases with a decreasing temperature. After the temperature is low enough, liquid begins to condense and crystallize, and an energy state of the system is the lowest in a crystalline state. Using this feature, we solve the maxima and minima of an objective function in a to-be-solved space. At a high temperature, due to the strong perturbation ability of the molecules and high tolerance to poor solutions, a global random search may be performed in a given state space, so that there is a high probability of jumping out of a local optimal solution. As the temperature gradually decreases, the perturbation ability of the molecules is weak, and the tolerance to poor solutions decreases. In this regard, a global search ability decreases, and a search ability for local extreme values increases. Finally, in an ideal state, a global optimal solution of the objective function may be obtained. The simulated annealing algorithm can effectively search large and complex spaces, accept a certain probability of poor scheduling schemes in the high temperature state, and slowly reduce the temperature to search for better schemes.

In some alternative implementations of the present embodiment, step 405 includes: calculating a probability of accepting the new scheduling scheme, based on the fitness value of the candidate scheduling scheme, the fitness value of the new scheduling scheme, and a current temperature.

In this implementation, the probability P of accepting the new scheduling scheme is calculated based on formula (2):

$$P = \begin{cases} 1 & if\ f(s_{new}) > f(s) \\ e^{(\frac{f(s_{new})\ -\ f(s),}{T})} & if\ f(s_{new}) < f(s) \end{cases} \qquad (2)$$

where, f(Snew) is the fitness value of the new scheduling scheme; f(S) is the fitness value of the candidate scheduling scheme; T is the current temperature. It can be seen that as the temperature T decreases, the probability P of accepting a poor solution also drops.

Step 406 includes in response to determining that the probability meets a preset condition, replacing the candidate scheduling scheme with the new scheduling scheme.

In the present embodiment, the executing body may replace the candidate scheduling scheme with the new scheduling scheme, in response to determining that the probability meets the preset condition. Alternatively, a value may be randomly generated between 0 and 1. If the value is less than P, the candidate scheduling scheme is replaced with the new scheduling scheme; otherwise, the candidate scheduling scheme is not replaced with the new scheduling scheme, that is, the candidate scheduling scheme is reserved, so as to ensure the convergence speed of the model.

Step 407 includes generating a new scheduling scheme list.

In the present embodiment, the executing body may combine the new scheduling schemes generated by the above steps to generate the new scheduling scheme list.

Step 408 includes determining a new scheduling scheme having a maximum fitness value in the new scheduling scheme list as the target scheduling scheme.

Step 408 is basically the same as step 305 in the foregoing embodiment. For a specific implementation, reference may be made to the foregoing description of step 305, and detailed description thereof will be omitted.

As can be seen from Fig. 4, compared with the embodiment corresponding to Fig. 3, the method for multi-task scheduling in the present embodiment highlights the step of determining whether to replace the candidate scheduling scheme with the new scheduling scheme based on the comparison result of the fitness value of the new scheduling scheme with the fitness value of the candidate scheduling scheme, so that the new scheduling scheme can make the machine learning task converge faster and improve a training speed.

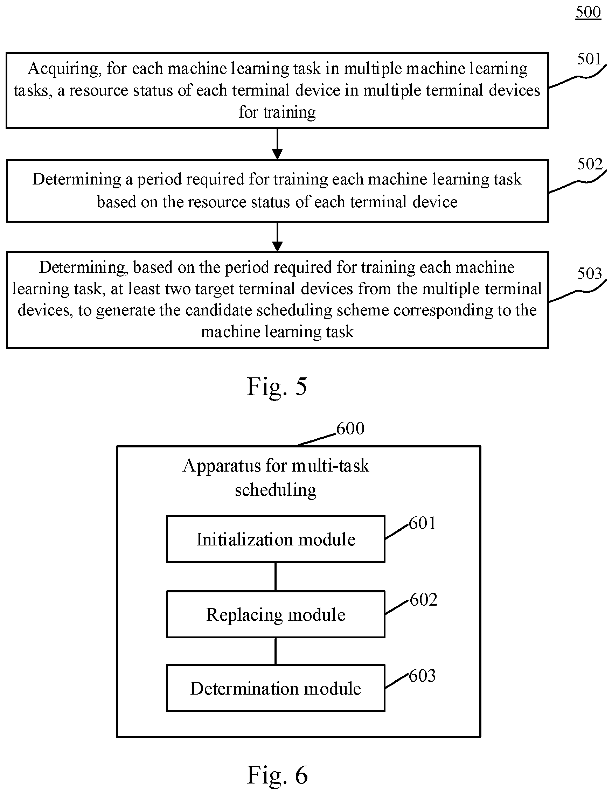

With further reference to Fig. 5, an exploded flowchart 500 of generation steps of a candidate scheduling scheme of the method for multi-task scheduling shown in Fig. 4 is shown. The steps may be exploded as follows.

Step 501 includes acquiring, for each machine learning task in the plurality of machine learning tasks, a resource status of each terminal device in a plurality of terminal devices for training.

In the present embodiment, assuming that a system for federated learning consists of a server and K terminal devices, a set of the K terminal devices is denoted as K, where an index of each terminal device is k={ 1,2,...,K}. The system for federated learning jointly participates in training of M machine learning tasks, where an index of the tasks is m={ 1,2,...,M}. Each terminal device has local training samples of the M tasks, where the local training sample of the m$^{th}$ task on the k$^{th}$ device is $\mathcal{D}_k^m = \{x_{k,d}^m \in \mathbb{R}^{s_m}, y_{k,d}^m \in \mathbb{R}\}_{d=1}^{D_k^m}$, where $D_k^m = |\mathcal{D}_k^m|$ is the number of samples of data, $x_{k,d}^m$ is the d$^{th}$ Sm-dimensional input data vector of the m$^{th}$ task on the device k, and $y_{k,d}^m$ is a tag of data $x_{k,d}^m$.

Therefore, an entire dataset of the task m may be represented as $\mathcal{D}^m = \bigcup_{k \in \mathcal{K}} \mathcal{D}_k^m$, and its number of samples is $D^m = \sum_{k \in \mathcal{K}} D_k^m$.

Each device has the datasets of all tasks, and multi-task federated learning learns respective model parameters Wm from the corresponding datasets through loss functions of different tasks. A global learning problem of multi-task federated learning may be expressed by the following formula:

$$\min_{W} \sum_{m=1}^{M} \sum_{k=1}^{K} \frac{D_k^m}{D^m} F_k^m(w^m) \qquad (3)$$

where, $F_k^m(\boldsymbol{w}^m) = \frac{1}{D_k^m}\sum_{d\in\mathcal{D}_k^m} f^m(\boldsymbol{w}^m; \boldsymbol{x}_{k,d}^m, y_{k,d}^m)$, $W := \{w^1, w^2, ..., w^m\}$ is a set of model weights of all tasks, and $f^m(\boldsymbol{w}^m; \boldsymbol{x}_{k,d}^m, y_{k,d}^m)$ is a model loss on the parameter $w^m$ of an input-output data pair { $x_{k,d}^m, y_{k,d}^m$ } of the $m^{th}$ task.

To solve the problem of formula (3), the server needs to continuously select local devices for different tasks according to multi-task federated learning schemes to iteratively update a global model until the model for all tasks converges. While ensuring a convergence accuracy, how to make each task complete convergence as soon as possible is the main concern of the scheme of the present disclosure. To this end, in the method of the embodiments of the present disclosure, terminal devices are allocated to each task taking into account the period taken for all tasks to complete training.

Therefore, for each machine learning task in the plurality of machine learning tasks, the executing body may first acquire the resource status of each terminal device in the plurality of terminal devices for training.

For example, for each machine learning task in the plurality of machine learning tasks, the server sends a resource request to each terminal device, and determines the current resource status of each terminal device based on a response from each terminal device.

Step 502 includes determining a period required for training each machine learning task based on the resource status of each terminal device.

In the present embodiment, the executing body may determine the period required for training each machine learning task based on the resource status of each terminal device. Thus, target terminal devices are determined based on the period required for training each task.

After the $k^{th}$ terminal device receives parameters of the global model of the $m^{th}$ task, the period required for completing the $r^{th}$ round of training is determined by the computation time $t_k^{cp}$ and the communication time $t_k^{cm}$. For each task, the period required for each round of training is determined by the slowest device among the terminal devices training the task. Assuming that communication between the terminal devices and the server is parallel, the period required for the $r^{th}$ round of training of the $m^{th}$ task is as follows:

$$t_m^{round}(s_m) \geq \max_{k\in s_m}\{t_{k,m}^{cm} + t_{k,m}^{cp}\} \tag{4}$$

Step 503 includes determining, based on the period required for training each machine learning task, at least two target terminal devices from the plurality of terminal devices, to generate the candidate scheduling scheme corresponding to the machine learning task.

In the present embodiment, in order to improve multi-task training, an efficiency optimization problem is proposed as follows:

$$\min_S\left\{ \sum_{s_m\subset S}\sum_{r=1}^{R_m}\max_{k\in s_m}\{t_{k,m}^{cm} + t_{k,m}^{cp}\} \right\} \tag{5}$$

$$\min_S\left\{ \max_{s_m\subset S}\sum_{r=1}^{R_m}\max_{k\in s_m}\{t_{k,m}^{cm} + t_{k,m}^{cp}\} \right\} \tag{6}$$

$$s.t. \quad s_m \subset \mathcal{K}, \forall m \in \{1, 2, ..., M\} \tag{7}$$

$$S = \{s_1, s_2, ..., s_M\} \qquad (8)$$

$$\frac{1}{\beta_m^0 R_m + \beta_m^1} + \beta_m^2 \leq l_m \qquad (9)$$

where, $S_m^r$ is the terminal devices in the $r^{th}$ round of training of the task m; Sm is the set of terminal devices in all rounds of training of the task m; S is the set of terminal devices in all rounds of training of all tasks; $\beta_m^0$, $\beta_m^1$, $\beta_m^2$ represent parameters of a convergence curve of the task m; $\beta_m$ represents a parameter of the convergence curve of the machine learning task m, $l_m$ is an expected loss value of the task m or a loss value to achieve convergence, and $R_m$ represents the number of rounds required to achieve the expected loss $l_m$. Thus, the convergence accuracy is constrained, and given the convergence accuracy of the task, the number of training rounds required for task convergence is also determined.

The above optimization problem minimizes the period required for convergence of all tasks. Since the M tasks are trained in parallel, both sizes of the local training samples and the complexity of the global model vary, so the periods required for completing updates of different tasks by a given device are also different. In order to describe the randomness of the period required for local model update, it is assumed that the period $t_{k,m,r}^{cp}$ required for completing a round of training by the terminal device follows a displacement exponential distribution:

$$P[t_{k,m}^{cp} < t] = \begin{cases} 1 - e^{-\frac{\mu_k}{\tau_m D_k^m}(t - \tau_m a_k D_k^m)}, & t \geq \tau_m a_k D_k^m \\ 0, & otherwise \end{cases} \qquad (10)$$

where, parameters $a_k > 0$ and $\mu_k > 0$ are a maximum value and a fluctuating value of the computing power of the device k. Due to strong computing power of the server and low model complexity of the task, computation time of model aggregation may be omitted.

The formulas (5) and (6) to be solved are a combinatorial optimization problem. In order to solve this problem, after receiving resource information of idle terminal devices, the server may schedule terminal devices required for each task based on the received device information. In addition, the number of training rounds for each task does not need to be the same, and tasks do not need to wait for each other. In general, given the convergence accuracy of the global model, as shown in formula (9), the number of rounds required for convergence is also determined.

In an ideal situation, that is, resources and states of all devices remain unchanged, and the server may schedule the devices required to complete all rounds of training for each task at one time based on all the device information. However, in an actual edge computing environment, the resources and states of edge devices may change. For example, a device may be currently idle and available, but after a period of time, the device may be busy and unavailable or some resources may be occupied. Therefore, it is unrealistic to complete all device scheduling at one time. To this end, in the present embodiment, when considering actual scheduling, for each round of training, the terminal devices required for this round of training are scheduled for the to-be-trained task, while ensuring at a current time, a training period required for all tasks is the shortest. That is, each task requires the server to arrange devices for itself in each round of training, thereby improving the training efficiency of all tasks.

In the process of device scheduling, the fairness of device participation and distribution balance of data participating training are the key factors affecting the convergence speed. if devices performing training fast are used too much, although this speeds up each round of training, the training of the global model is performed on few devices, ultimately leading to a drop in task convergence accuracy. An ultimate goal of training is to make all federated learning tasks converge as soon as possible while ensuring the accuracy of the model. Therefore, the present embodiment performs device scheduling on the premise of ensuring the fairness of device participation as much as possible.

For the balance of the data participating training, it may be used together with the training period as targets to be optimized. Assuming that a set of devices scheduled by the server for the current task m in the $r_m$ round is $s_m$, where $m \in \{1,2,3,...,M\}$. The number |K| of all devices is denoted as N, indexed by n. There is a set $Q_m$ of size N, where $Q_m[n]=0$.

Therefore, a variance of fairness of device scheduling of the task m on all devices may be calculated based on the following formula (11):

$$g(s_m) = \frac{1}{N} \sum_{n=0}^{N} (Q_m[n] - \frac{1}{N} \sum_{n=0}^{N} Q_m[n])^2 \qquad (11)$$

The more balanced the data participated in model training is, the faster and more stable the model may converge. At the same time, considering that the current scheduling of the task m may have an impact on other tasks, when scheduling terminal devices for a round of training of the current task m, running conditions for the round of training of all tasks may be considered, and the efficiency optimization problem in the present embodiment is optimized from formulas (5) and (6) to the following formula (12), that is, the problem solved when scheduling terminal devices for the $r^{th}$ round of training of the task m may be written as:

$$\min_{S} \left\{ \sum_{s_m \subset S} \max_{k \in s_m} \{t_{k,m}^{cm} + t_{k,m}^{cp}\} + \lambda_m g(s_m) \right\} \qquad (12)$$

For the above combinatorial optimization problem, a greedy algorithm may be used in the present embodiment to determine at least two target terminal devices from the plurality of terminal devices based on the period required for training each machine learning task, to generate the candidate scheduling scheme corresponding to the machine learning task.

Each terminal device is substituted into formula (12), the period required for each terminal device to train each global model may be obtained, and a period required for all global models of the terminal devices may be obtained by summing the periods, and an optimized value is obtained by a summation of the period required for all global models of the terminal devices and a fluctuation value parameter. The terminal devices are arranged in an order of optimized values, and at least two target terminal devices are determined from the plurality of terminal devices, to generate the candidate scheduling scheme corresponding to the machine learning task. Therefore, in each round of terminal device scheduling, the period required for convergence of all tasks in this round can be ensured to be minimal, and the training efficiency is improved.

As can be seen from Fig. 5, when the method in the present embodiment generates a scheduling scheme for each machine learning task in a plurality of machine learning tasks, based on the period required by each machine learning task, it is ensured that at the current time, the training period required for all tasks is the shortest, thereby improving the training efficiency of all tasks.

With further reference to Fig. 6, as an implementation of the method shown in the above figures, the present disclosure provides an embodiment of an apparatus for multi-task scheduling, which corresponds to the method embodiment shown in Fig. 2, and the apparatus may be specifically applied to various electronic devices.

As shown in Fig. 6, an apparatus 600 for multi-task scheduling provided by the present embodiment includes: an initialization module 601, a replacing module 602 and a determination module 603. The initialization module 601 is configured to initialize a list of candidate scheduling schemes, the candidate scheduling scheme being used to allocate a terminal device for training to each machine learning task in a plurality of machine learning tasks. The replacing module 602 is configured to perturb, for each candidate scheduling scheme in the list of candidate scheduling schemes, the candidate scheduling scheme to generate a new scheduling scheme; determine whether to replace the candidate scheduling scheme with the new scheduling scheme based on a fitness value of the candidate scheduling scheme and a fitness value of the new scheduling scheme, to generate a new scheduling scheme list. The determination module 603 is configured to determine a target scheduling scheme, based on the fitness value of each new scheduling scheme in the new scheduling scheme list.

In the present embodiment, in the apparatus 600 for multi-task scheduling: for the specific processing and the technical effects of the initialization module 601, the replacing module 602 and the determination module 603, reference may be made to the relevant descriptions of the steps 201-203 in the corresponding embodiment of Fig. 2 respectively, and detailed description thereof will be omitted.

In some alternative implementations of the present embodiment, the apparatus 600 further includes a candidate scheduling scheme generation module, and the candidate scheduling scheme generation module includes: an acquisition submodule, configured to acquire, for each machine learning task in the plurality of machine learning tasks, a resource status of each terminal device in a plurality of terminal devices for training; a first determining submodule, configured to determine a period required for training each machine learning task based on the resource status of each terminal device; and a second determining submodule, configured to determine, based on the period required for training each machine learning task, at least two target terminal devices from the plurality of terminal devices, to generate the candidate scheduling scheme corresponding to the machine learning task.

In some alternative implementations of the present embodiment, the replacing module includes: a first replacing submodule, configured to generate the new scheduling scheme by randomly replacing any terminal device in the candidate scheduling scheme with a new terminal device that does not violate device constraints.

In some alternative implementations of the present embodiment, the replacing module includes: a comparing submodule, configured to compare the fitness value of the candidate scheduling scheme with the fitness value of the new scheduling scheme; and a second replacing submodule, configured to determine whether to replace the candidate scheduling scheme with the new scheduling scheme based on a comparison result, to generate the new scheduling scheme list.

In some alternative implementations of the present embodiment, the second replacing submodule includes: a first replacing unit, configured to, in response to determining that the fitness value of the new scheduling scheme is greater than the fitness value of the candidate scheduling scheme, replace the candidate scheduling scheme with the new scheduling scheme, to generate the new scheduling scheme list.

In some alternative implementations of the present embodiment, the second replacing submodule further includes: a calculation unit, configured to, in response to determining that the fitness value of the new scheduling scheme is not greater than the fitness value of the candidate scheduling scheme, calculate a probability of accepting the new scheduling scheme based on a simulated annealing algorithm; and a second replacing unit, configured to, in response to determining that the probability meets a preset condition, replace the candidate scheduling scheme with the new scheduling scheme, to generate the new scheduling scheme list.

In some alternative implementations of the present embodiment, the calculation unit includes: a calculation subunit, configured to calculate the probability of accepting the new scheduling scheme, based on the fitness value of the candidate scheduling scheme, the fitness value of the new scheduling scheme, and a current temperature.

In some alternative implementations of the present embodiment, the fitness value is calculated based on communication time and computation time of each terminal device in the scheduling scheme.

In some alternative implementations of the present embodiment, the determination module includes: a third determining submodule, configured to determine a new scheduling scheme having a maximum fitness value in the new scheduling scheme list as the target scheduling scheme.

According to an embodiment of the present disclosure, the present disclosure also provides an electronic device, a readable storage medium, and a computer program product.

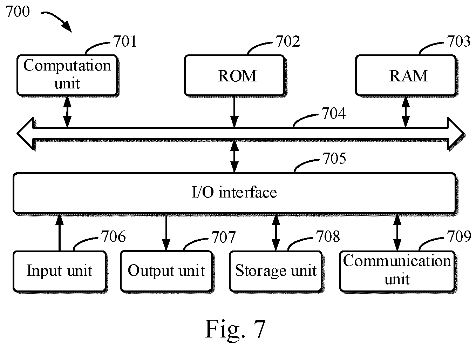

Fig. 7 illustrates a schematic block diagram of an example electronic device 700 that may be adapted to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 7, the device 700 includes a computing unit 701, which may perform various appropriate actions and processing, based on a computer program stored in a read-only memory (ROM) 702 or a computer program loaded from a storage unit 708 into a random access memory (RAM) 703. In the RAM 703, various programs and data required for the operation of the device 700 may also be stored. The computing unit 701, the ROM 702, and the RAM 703 are connected to each other through a bus 704. An input/output (I/O) interface 705 is also connected to the bus 704.

A plurality of parts in the device 700 are connected to the I/O interface 705, including: an input unit 706, for example, a keyboard and a mouse; an output unit 707, for example, various types of displays and speakers; the storage unit 708, for example, a disk and an optical disk; and a communication unit 709, for example, a network card, a modem, or a wireless communication transceiver. The communication unit 709 allows the device 700 to exchange information/data with other devices over a computer network such as the Internet and/or various telecommunication networks.

The computing unit 701 may be various general-purpose and/or dedicated processing components having processing and computing capabilities. Some examples of the computing unit 701 include, but are not limited to, central processing unit (CPU), graphics processing unit (GPU), various dedicated artificial intelligence (AI) computing chips, various computing units running machine learning model algorithms, digital signal processors (DSP), and any appropriate processors, controllers, microcontrollers, etc. The computing unit 701 performs the various methods and processes described above, such as a method for multi-task scheduling. For example, in some embodiments, the method for multi-task scheduling may be implemented as a computer software program, which is tangibly included in a machine readable medium, such as the storage unit 708. In some embodiments, part or all of the computer program may be loaded and/or installed on the device 700 via the ROM 702 and/or the communication unit 709. When the computer program is loaded into the RAM 703 and executed by the computing unit 701, one or more steps of the method for multi-task scheduling described above may be performed. Alternatively, in other embodiments, the computing unit 701 may be configured to perform the method for multi-task scheduling by any other appropriate means (for example, by means of firmware).

Various embodiments of the systems and techniques described above herein may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), computer hardware, firmware, software, and/or a combination thereof. These various embodiments may include: being implemented in one or more computer programs, the one or more computer programs may be executed and/or interpreted on a programmable system including at least one programmable processor, the programmable processor may be a special-purpose or general-purpose programmable processor, and may receive data and instructions from a storage system, at least one input device, and at least one output device, and transmitting data and instructions to the storage system, the at least one input device, and the at least one output device.

The program code for implementing the methods of the present disclosure may be written in any combination of one or more programming languages. These program codes can be provided to the processor or controller of a general-purpose computer, a special-purpose computer or other programmable data processing device, so that the program code, when executed by the processor or controller, enables the functions/operations specified in the flowchart and/or block diagram to be implemented. The program code can be fully executed on the machine, partially executed on the machine, partially executed on the machine and partially executed on the remote machine as a separate software package, or completely executed on the remote machine or server.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. Machine readable media may include, but is not limited to, electronic, magnetic, optical, electromagnetic, infrared, or semiconductor system, apparatus, or device, or any suitable combination of the foregoing. More specific examples of machine-readable storage media may include electrical connections based on one or more lines, portable computer disks, hard disks, random access memory (RAM), read only memory (ROM), erasable programmable read only memory (EPROM or flash memory), optical fibers, compact disk read only memory (CD-ROM), optical storage devices, magnetic storage devices, or any suitable combination of the above.

In order to provide interaction with the user, the systems and techniques described herein may be implemented on a computer having: a display device (e.g., a CRT (cathode ray tube) or LCD (liquid crystal display) monitor) for displaying information to the user; and a keyboard and a pointing device (e.g., a mouse or trackball) through which a user can provide input to a computer. Other kinds of devices can also be used to provide interaction with users. For example, the feedback provided to the user may be any form of sensor feedback (e.g., visual feedback, auditory feedback, or tactile feedback); and the input from the user can be received in any form (including acoustic input, voice input or tactile input).

The systems and techniques described herein may be implemented in a computing system including a background component (e.g., as a data server), or a computing system including a middleware component (e.g., an application server) or a computing system including a front-end component (e.g., a user computer with a graphical user interface or a web browser through which a user can interact with embodiments of the systems and techniques described herein), or a computing system including such a back-end component, a middleware component, or any combination of front-end components. The components of the system may be interconnected by digital data communication (e.g., a communication network) in any form or medium. Examples of communication networks include local area networks (LANs), wide area networks (WANs), and the Internet.

A computer system may include a client and a server. The client and server are generally far away from each other and usually interact through a communication network. A client server relationship is generated by a computer program running on the corresponding computer and having a client server relationship with each other. The server can be a cloud server, a distributed system server, or a blockchain server.

It should be understood that steps can be reordered, added, or deleted using the various forms of processes shown above. For example, the steps described in the present disclosure can be performed in parallel, in sequence, or in different orders. As long as the desired results of the technical solution of the present disclosure can be achieved, this article is not limited here.

The above specific embodiments do not constitute restrictions on the scope of the present disclosure. Those skilled in the art should understand that various modifications, combinations, sub combinations and substitutions can be made according to design requirements and other factors. Any modification, equivalent replacement and improvement made within the spirit and principles of this disclosure shall be included in the scope of protection of this disclosure.

**Claims**

1. A method for multi-task scheduling, the method comprising:

   initializing (201) a list of candidate scheduling schemes, the candidate scheduling scheme being used to allocate a terminal device for training to each machine learning task in a plurality of machine learning tasks;
   perturbing (202), for each candidate scheduling scheme in the list of candidate scheduling schemes, the candidate scheduling scheme to generate a new scheduling scheme; determining whether to replace the candidate scheduling scheme with the new scheduling scheme based on a fitness value of the candidate scheduling scheme and a fitness value of the new scheduling scheme, to generate a new scheduling scheme list; and
   determining (203) a target scheduling scheme, based on the fitness value of each new scheduling scheme in the new scheduling scheme list.

2. The method according to claim 1, wherein the candidate scheduling scheme is generated by:

   acquiring (501), for each machine learning task in the plurality of machine learning tasks, a resource status of each terminal device in a plurality of terminal devices for training;
   determining (502) a period required for training each machine learning task based on the resource status of each terminal device; and
   determining (503), based on the period required for training each machine learning task, at least two target terminal devices from the plurality of terminal devices, to generate the candidate scheduling scheme corresponding to the machine learning task.

3. The method according to claim 1 or 2, wherein perturbing the candidate scheduling scheme to generate the new scheduling scheme, comprises:
   generating (302) the new scheduling scheme by randomly replacing any terminal device in the candidate scheduling scheme with the new terminal device, wherein the new terminal device does not violate a device constraint.

4. The method according to any one of claim 1 to 3, wherein determining whether to replace the candidate scheduling scheme with the new scheduling scheme based on the fitness value of the candidate scheduling scheme and the fitness value of the new scheduling scheme, to generate the new scheduling scheme list, comprises:

   comparing (303) the fitness value of the candidate scheduling scheme with the fitness value of the new scheduling scheme; and
   determining (304) whether to replace the candidate scheduling scheme with the new scheduling scheme based on a comparison result, to generate the new scheduling scheme list.

5. The method according to claim 4, wherein determining whether to replace the candidate scheduling scheme with the new scheduling scheme based on the comparison result, to generate the new scheduling scheme list, comprises:
   in response to determining that the fitness value of the new scheduling scheme is greater than the fitness value of the candidate scheduling scheme, replacing (404) the candidate scheduling scheme with the new scheduling scheme, to generate the new scheduling scheme list.

6. The method according to claim 4, wherein determining whether to replace the candidate scheduling scheme with the new scheduling scheme based on the comparison result, to generate the new scheduling scheme list, further comprises:

   in response to determining that the fitness value of the new scheduling scheme is not greater than the fitness value of the candidate scheduling scheme, calculating (405) a probability of accepting the new scheduling scheme based on a simulated annealing algorithm; and
   in response to determining that the probability meets a preset condition, replacing (406) the candidate scheduling scheme with the new scheduling scheme, to generate the new scheduling scheme list.

7. The method according to claim 6, wherein calculating the probability of accepting the new scheduling scheme based on the simulated annealing algorithm, comprises:
   calculating the probability of accepting the new scheduling scheme, based on the fitness value of the candidate scheduling scheme, the fitness value of the new scheduling scheme, and a current temperature.

8. The method according to any one of claims 1-7, wherein the fitness value is calculated based on communication time and computation time of each terminal device in the scheduling scheme.

9. The method according to any one of claims 1-8, wherein determining the target scheduling scheme, based on the fitness value of each new scheduling scheme in the new scheduling scheme list, comprises:
determining (408) a new scheduling scheme having a maximum fitness value in the new scheduling scheme list as the target scheduling scheme.

10. An apparatus for multi-task scheduling, the apparatus comprising:

an initialization module (601), configured to initialize a list of candidate scheduling schemes, the candidate scheduling scheme being used to allocate a terminal device for training to each machine learning task in a plurality of machine learning tasks;
a replacing module (602), configured to perturb, for each candidate scheduling scheme in the list of candidate scheduling schemes, the candidate scheduling scheme to generate a new scheduling scheme; determine whether to replace the candidate scheduling scheme with the new scheduling scheme based on a fitness value of the candidate scheduling scheme and a fitness value of the new scheduling scheme, to generate a new scheduling scheme list; and
a determination module (603), configured to determine a target scheduling scheme, based on the fitness value of each new scheduling scheme in the new scheduling scheme list.

11. The apparatus according to claim 10, wherein the apparatus further comprises a candidate scheduling scheme generation module, and the candidate scheduling scheme generation module comprises:

an acquisition submodule, configured to acquire, for each machine learning task in the plurality of machine learning tasks, a resource status of each terminal device in a plurality of terminal devices for training;
a first determining submodule, configured to determine a period required for training each machine learning task based on the resource status of each terminal device; and
a second determining submodule, configured to determine, based on the period required for training each machine learning task, at least two target terminal devices from the plurality of terminal devices, to generate the candidate scheduling scheme corresponding to the machine learning task.

12. The apparatus according to claim 10 or 11, wherein the replacing module comprises:
a first replacing submodule, configured to generate the new scheduling scheme by randomly replacing any terminal device in the candidate scheduling scheme with the new terminal device, wherein the new terminal device does not violate a device constraint.

13. The apparatus according to any one of claims 10 to 12, wherein the replacing module comprises:

a comparing submodule, configured to compare the fitness value of the candidate scheduling scheme with the fitness value of the new scheduling scheme; and
a second replacing submodule, configured to determine whether to replace the candidate scheduling scheme with the new scheduling scheme based on a comparison result, to generate the new scheduling scheme list, wherein the second replacing submodule preferably comprises:
a first replacing unit, configured to, in response to determining that the fitness value of the new scheduling scheme is greater than the fitness value of the candidate scheduling scheme, replace the candidate scheduling scheme with the new scheduling scheme, to generate the new scheduling scheme list, wherein the second replacing submodule preferably comprises:

a calculation unit, configured to, in response to determining that the fitness value of the new scheduling scheme is not greater than the fitness value of the candidate scheduling scheme, calculate a probability of accepting the new scheduling scheme based on a simulated annealing algorithm; and
a second replacing unit, configured to, in response to determining that the probability meets a preset condition, replace the candidate scheduling scheme with the new scheduling scheme, to generate the new scheduling scheme list.

14. A non-transitory computer readable storage medium storing computer instructions, wherein, the computer instructions are used to cause the computer to perform the method according to any one of claims 1-9.

**15.** A computer program product, comprising a computer program, wherein the computer program, when executed by a processor, implements the method according to any one of claims 1-9.

Fig. 1

| | 201 |
|---|---|
| Initializing a list of candidate scheduling schemes | |

| | 202 |
|---|---|
| Perturbing, for each candidate scheduling scheme in the candidate scheduling scheme list, the candidate scheduling scheme to generate a new scheduling scheme; determining whether to replace the candidate scheduling scheme with the new scheduling scheme based on a fitness value of the candidate scheduling scheme and a fitness value of the new scheduling scheme, to generate a new scheduling scheme list | |

| | 203 |
|---|---|
| Determining a target scheduling scheme, based on the fitness value of each new scheduling scheme in the new scheduling scheme list | |

Fig. 2

<u>300</u>

<u>301</u>

┌─────────────────────────────────────────────────────┐
│        Initializing a candidate scheduling scheme list         │
└─────────────────────────────────────────────────────┘

302

┌─────────────────────────────────────────────────────┐
│  For each candidate scheduling scheme in the candidate scheduling  │
│  scheme list, generating the new scheduling scheme by randomly   │
│  replacing any terminal device in the candidate scheduling scheme  │
│  with a new terminal device that does not violate device constraints │
└─────────────────────────────────────────────────────┘

<u>303</u>

┌─────────────────────────────────────────────────────┐
│  Comparing the fitness value of the candidate scheduling scheme   │
│      with the fitness value of the new scheduling scheme       │
└─────────────────────────────────────────────────────┘

304

┌─────────────────────────────────────────────────────┐
│  Determining whether to replace the candidate scheduling scheme  │
│  with the new scheduling scheme based on a comparison result, to  │
│         generate the new scheduling scheme list          │
└─────────────────────────────────────────────────────┘

305

┌─────────────────────────────────────────────────────┐
│  Determining a new scheduling scheme having a maximum fitness   │
│  value in the new scheduling scheme list as the target scheduling  │
│                    scheme                    │
└─────────────────────────────────────────────────────┘

Fig. 3

<u>400</u>

401
```
Initializing a candidate scheduling scheme list
```

402
```
For each candidate scheduling scheme in the candidate scheduling
scheme list, generating the new scheduling scheme by randomly
replacing any terminal device in the candidate scheduling scheme
with a new terminal device that does not violate device
constraints
```

403
```
Comparing the fitness value of the candidate scheduling scheme
with the fitness value of the new scheduling scheme
```

404
```
In response to determining that
the fitness value of the new
scheduling scheme is greater
than the fitness value of the
candidate scheduling scheme,
replacing the candidate
scheduling scheme with the
new scheduling scheme
```

405
```
In response to determining that the fitness
value of the new scheduling scheme is not
greater than the fitness value of the
candidate scheduling scheme, calculating
a probability of accepting the new
scheduling scheme based on a simulated
annealing algorithm
```

406
```
In response to determining that the
probability meets a preset condition,
replacing the candidate scheduling scheme
with the new scheduling scheme
```

407
```
Generating a new scheduling scheme list
```

408
```
Determining a new scheduling scheme having a maximum fitness
value in the new scheduling scheme list as the target scheduling
scheme
```

Fig. 4

<u>500</u>

Acquiring, for each machine learning task in multiple machine learning tasks, a resource status of each terminal device in multiple terminal devices for training    — 501

Determining a period required for training each machine learning task based on the resource status of each terminal device    — 502

Determining, based on the period required for training each machine learning task, at least two target terminal devices from the multiple terminal devices, to generate the candidate scheduling scheme corresponding to the machine learning task    — 503

## Fig. 5

600

Apparatus for multi-task scheduling

Initialization module    — 601

Replacing module    — 602

Determination module    — 603

## Fig. 6

700

701
Computation
unit

702
ROM

703
RAM

704

705
I/O interface

706
Input unit

707
Output unit

708
Storage unit

709
Communication
unit

Fig. 7

Europäisches
Patentamt

European
Patent Office

Office européen
des brevets

# EUROPEAN SEARCH REPORT

Application Number

EP 22 18 5517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/307899 A1 (LEE GUNHO [US] ET AL) 15 December 2011 (2011-12-15) * paragraph [0026] - paragraph [0031]; figures 1,7 * ----- | 1-15 | INV. G06F9/50 |
| A | SHI CHEN ET AL: "A Cloud Computing Resource Scheduling Policy Based on Genetic Algorithm with Multiple Fitness", COMPUTER AND INFORMATION TECHNOLOGY (CIT), 2012 IEEE 12TH INTERNATIONAL CONFERENCE ON, IEEE, 27 October 2012 (2012-10-27), pages 177-184, XP032290353, DOI: 10.1109/CIT.2012.56 ISBN: 978-1-4673-4873-7 * the whole document * ----- | 1-15 | |

TECHNICAL FIELDS
SEARCHED       (IPC)

G06F

The present search report has been drawn up for all claims

| Place of search | Date of completion of the search | Examiner |
|---|---|---|
| The Hague | 1 December 2022 | Mühlenbrock, Martin |

EPO FORM 1503 03.82 (P04C01)

## ANNEX TO THE EUROPEAN SEARCH REPORT
## ON EUROPEAN PATENT APPLICATION NO.

**EP 22 18 5517**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-12-2022**

| Patent document cited in search report | Publication date | Patent family member(s) | Publication date |
|---|---|---|---|
| US 2011307899   A1 | 15-12-2011 | NONE | |

For more details about this annex : see Official Journal of the European Patent Office, No. 12/82